# EUROPÄISCHE PATENTANMELDUNG

(11) **EP 0 762 696 A1**
(43) Veröffentlichungstag der Anmeldung: **12.03.1997**
(21) Anmeldenummer: 96202366.9
(22) Anmeldetag: 26.08.1996
(51) Int. Cl.: H04L 12/56, H04L 12/42

(54) **Lokales, nach dem asynchronen Transfermodus (ATM) arbeitendes Netzwerk zur Erzeugung von priorisierten Zellen**

(30) Priorität: 01.09.1995 DE 19532421
(71) Anmelder: Philips Patentverwaltung GmbH, 22335 Hamburg (DE); Philips Electronics N.V., 5621 BA Eindhoven (NL)
(72) Erfinder: Semal, Pierre, Dr.-Ing., 22335 Hamburg (DE)
(74) Vertreter: Volmer, Georg, Dipl.-Ing.

(57) **Zusammenfassung**

Die Erfindung bezieht sich auf ein lokales, nach dem asynchronen Transfermodus (ATM) arbeitendes Netzwerk zur Übertragung von Zellen mit mehreren über Ringanschlüsse (15, 18, 19, 22; 48, 49) gekoppelten Netzwerkschnittstellen, die über weitere Anschlüsse (23, 24; 50, 51) entweder mit jeweils einer Station oder mit jeweils einer Netzwerkschnittstelle eines anderen Ringsystems gekoppelt sind und die jeweils zur Vermittlung von von einer Station oder von einer Netzwerkschnittstelle erzeugten Zellen vorgesehen sind. Zur Verhinderung einer Blockierung von Zellen sind eine Station oder eine Netzwerkschnittstelle (7, 47) zur Kennzeichnung von erzeugten Zellen mit einer hohen oder niedrigen Priorität vorgesehen.

## Beschreibung

Die Erfindung bezieht sich auf ein lokales, nach dem asynchronen Transfermodus (ATM) arbeitendes Netzwerk zur Übertragung von Zellen mit mehreren über Ringanschlüsse gekoppelten Netzwerkschnittstellen, die über weitere Anschlüsse entweder mit jeweils einer Station oder mit jeweils einer Netzwerkschnittstelle eines anderen Ringsystems gekoppelt sind und die jeweils zur Vermittlung von von einer Station oder von einer Netzwerkschnittstelle erzeugten Zellen vorgesehen sind.

Ein lokales Netzwerk (LAN), welches nach dem asynchronen Transfermodus arbeitet, ist aus der EP 0 641 105 A2 bekannt. Dieses Netzwerk enthält mehrere Stationen und zugeordnete Netzwerkschnittstellen, die jeweils einen Sende- und Empfangs-Ringanschluß aufweisen. Über den so gebildeten Ring werden Zellen übertragen, die Adreßinformationen über den Bestimmungsort beispielsweise einer bestimmten Station enthalten. Eine Netzwerkschnittstelle enthält eine Koppelvorrichtung und eine Steueranordnung. Die Koppelvorrichtung enthält eine Wegespeicheranordnung, die dem Empfangs-Ringanschluß zugeordnet ist, und eine Wegespeicheranordnung, welche einem Empfangs-Stationsanschluß zugeordnet ist. Anhand der Wegespeicheranordnungen werden bei Empfang einer Zelle die entsprechenden Schalt- oder Kopplungsvorgänge in der Koppelvorrichtung durchgeführt. Beispielsweise wird eine eintreffende Zelle anhand der Adreßinformationen zu der Steueranordnung, zur Station und/oder zum Ring weitergeleitet.

Bei Verwendung eines asynchronen Transfermodus in einem System werden Nutzinformationen, z.B. Fernsprech-, Bild- oder Tonsignale, in Blöcken fester Länge über Anordnungen zur digitalen Signalverarbeitung gesendet. Als ein Block fester Länge wird eine Zelle bezeichnet, die eine vorbestimmte Anzahl von Bytes (z.B. 53 Bytes) aufweist. Jede Zelle besteht aus einem Kopffeld mit einer Länge von beispielsweise 5 Byte und einem Informationsfeld, in dem die Nutzinformation untergebracht ist, mit einer Länge von beispielsweise 48 Byte. In einem solchen Kopffeld sind Adreßinformationen, Daten zur Fehlererkennung und Daten für Steuerinformationen vorhanden. Unter Adreßinformationen fallen Bündelkennungen und Verbindungskennungen. Die Verbindungskennung, die auch als VCI (Virtual Channel Identifier) bezeichnet wird, enthält die Angabe über den Bestimmungsort der Zelle in dem System. Zur Übermittlung einer Zelle wird anhand der Verbindungskennung ein virtueller Kanal zur Verfügung gestellt. In der Regel wird ein VCI nach Erreichen einer Vermittlungsstelle jeweils verändert. Ein Bündel mehrerer virtueller Kanäle wird als virtueller Pfad bezeichnet. Ein virtueller Pfad wird durch die Bündelkennung gekennzeichnet. Ein solcher virtueller Pfad wird VPI (Virtual Path Identifier) genannt. Zellen sind aufeinanderfolgend bestimmten Zeitabschnitten zugeordnet. Die Dauer eines solchen Zeitabschnittes hängt von der zugrundegelegten Taktfrequenz der Übermittlungskomponente ab. Falls keine Nutzinformation vorhanden ist, werden in einem solchen Zeitabschnitt Leerzellen übertragen, d.h. Zellen ohne Nutzinformation. Zellen, die eine Nutzinformation beinhalten, werden als Nutzzellen bezeichnet.

Das aus der EP 0 641 105 A2 bekannte lokale Netzwerk könnte über eine Netzwerkschnittstelle mit einer Netzwerkschnittstelle eines anderen Ringsystems gekoppelt werden. Ein Ringsystem kann dabei einen Ring oder zwei Ringe für gegenläufige Zellenströme aufweisen. Ein Ring stellt einen geschlossenen Signalweg über mehrere Netzwerkschnittstellen dar. Bei einem Fehler im lokalen Netzwerk (z.B. Ausfall einer Leitung) kann es insbesondere bei einem hohen Verkehrsaufkommen zu Blockierungen kommen.

Der Erfindung liegt daher die Aufgabe zugrunde, ein lokales, nach dem asynchronen Transfermodus arbeitendes Netzwerk zu schaffen, bei welchen eine Blockierung verhindert wird.

Die Erfindung wird durch ein lokales, nach dem asynchronen Transfermodus arbeitendes Netzwerk der eingangs genannten Art dadurch gelöst, daß eine Station oder eine Netzwerkschnittstelle zur Kennzeichnung von erzeugten Zellen mit einer hohen oder niedrigen Priorität und daß eine Station oder eine Netzwerkschnittstelle bei Überschreitung einer bestimmten Anzahl von empfangenen Zellen während eines vorgegebenen Zeitabschnittes zur Löschung der Zellen mit niedriger Priorität vorgesehen ist.

Aufgrund der Priorisierung der Zellen können bei einem hohen Verkehrsaufkommen und der Gefahr einer Blockierung nur solche Zellen in einer Netzwerkschnittstelle weitergeleitet werden, die eine hohe Priorität aufweisen. Die in einer Station oder Netzwerkschnittstelle empfangenen Zellen mit niedriger Priorität werden bei Überschreitung einer bestimmten Anzahl von Zellen während eines vorgegebenen Zeitabschnittes gelöscht. Hierbei kann die Feststellung über die Anzahl der empfangenen Zellen beispielsweise durch Überprüfung des Füllstandes eines in der Netzwerkschnittstelle befindlichen Pufferspeichers erfolgen.

Die in einer Station oder einer Netzwerkschnittstelle erzeugten Zellen werden durch ein Bit im Kopffeld einer erzeugten Zelle mit einer hohen oder niedrigen Priorität gekennzeichnet.

In einer Weiterbildung der Erfindung enthält eine Netzwerkschnittstelle an Ring-, Stations- oder Brückenanschlüssen Pufferspeicher. Bei Überschreiten eines bestimmten Pufferfüllstandes ist die Netzwerkschnittstelle zur Löschung von den Pufferspeicher durchlaufenden Zellen mit einer niedrigen Priorität vorgesehen.

Die Löschung der Zellen kann eine mit bestimmten Pufferspeichern gekoppelte Empfangsschaltung vornehmen. Daher enthält eine Netzwerkschnittstelle eine Steueranordnung und Empfangsschaltungen, die jeweils Pufferspeichern zugeordnet sind, die zum Empfang von Zellen von einer anderen Netzwerkschnittstelle oder einer zugeordneten Station vorgesehen sind. Die Steueranordnung ist zum Empfang von Informationen über den Pufferfüllstand der in der Netzwerkschnittstelle angeordneten Pufferspeicher und zur Ausgabe von Löschungsmeldungen an die jeweils einem Pufferspeicher zugeordneten Empfangsschaltungen zur Löschung von Zellen mit einer niedrigen Priorität vorgesehen ist.

Die Erfindung bezieht sich auch auf eine Netzwerkschnittstelle für ein lokales, nach dem asynchronen Transfermodus (ATM) arbeitendes Netzwerk, welche zur Lieferung von Zellen über Ringanschlüsse zu anderen Netzwerkschnittstellen und über weitere Anschlüsse entweder zu jeweils einer Station oder zu jeweils einer Netzwerkschnittstelle eines anderen Ringsystems vorgesehen ist. Hierbei ist die Netzwerkschnittstelle zur Kennzeichnung von erzeugten Zellen mit einer hohen oder niedrigen Priorität und bei Überschreitung einer bestimmten Anzahl von empfangenen Zellen während eines vorgegebenen Zeitabschnittes zur Löschung der Zellen mit niedriger Priorität vorgesehen.

Ferner bezieht sich die Erfindung auch auf ein Verfahren zur Übertragung von Zellen in einem lokalen, nach dem asynchronen Transfermodus (ATM) arbeitenden Netzwerk mit mehreren über Ringanschlüsse gekoppelten Netzwerkschnittstellen, die über weitere Anschlüsse entweder mit jeweils einer Station oder mit jeweils einer Netzwerkschnittstelle eines anderen Ringsystems gekoppelt sind und die jeweils von einer Station oder von einer Netzwerkschnittstelle erzeugte Zellen vermitteln. Hierbei werden in einer Station oder einer Netzwerkschnittstelle erzeugte Zellen mit einer hohen oder niedrigen Priorität gekennzeichnet. Eine Station oder eine Netzwerkschnittstelle löschen bei diesem Verfahren bei Überschreitung einer bestimmten Anzahl von empfangenen Zellen während eines vorgegebenen Zeitabschnittes Zellen mit niedriger Priorität.

Ausführungsbeispiele der Erfindung werden nachstehend anhand der Figuren näher erläutert. Es zeigen:
- Fig. 1: ein lokales Netzwerk,
- Fig. 2: eine in dem lokalen Netzwerk nach Fig. 1 verwendbare Netzwerkschnittstelle mit vier Ringanschlüssen,
- Fig. 3: eine in dem lokalen Netzwerk nach Fig. 1 verwendbare Netzwerkschnittstelle mit zwei Ringanschlüssen,
- Fig. 4: eine aus drei Netzwerkschnittstellen mit jeweils zwei Ringanschlüssen gebildete Netzwerkschnittstelle mit vier Ringanschlüssen,
- Fig. 5: zwei über Brückenanschlüsse gekoppelte Netzwerkschnittstellen von zwei Ringsystemen und
- Fig. 6: vier über Brückenanschlüsse gekoppelte Netzwerkschnittstellen von zwei Ringsystemen.

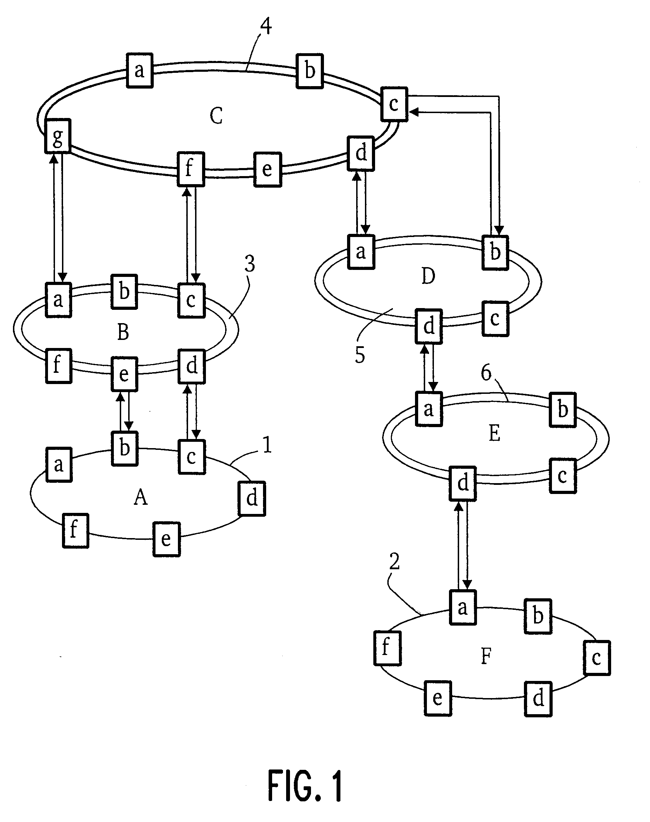

In Fig. 1 ist ein Ausführungsbeispiel eines lokalen Netzwerks mit sechs Ringsystemen 1 bis 6 dargestellt. Ein Ringsystem 1 bis 6 kann entweder aus einem oder zwei Ringen bestehen. Die Ringsysteme 1 und 2 enthalten einen und die Ringsysteme 3 bis 6 zwei Ringe. Ein Ring stellt einen geschlossenen Signalweg über mehrere Netzknoten dar. Die Ringsysteme 3 bis 6 bilden jeweils zwei gegenläufige Ringe, d.h. die Signale laufen auf den Ringen jeweils in entgegengesetzter Richtung. Ein Netzknoten, der in den Ringsystemen 1 bis 6 jeweils als Rechteck dargestellt ist, umfaßt eine Netzwerkschnittstelle mit zwei oder vier Ringanschlüssen und zwei Brückenanschlüssen.

An die Brückenanschlüsse ist entweder eine Station oder eine Netzwerkschnittstelle eines anderen Ringsystems angeschlossen. Beispielsweise sind in der Fig. 1 für das Ringsystem 4 insgesamt drei Netzwerkschnittstellen mit Stationen und vier Netzwerkschnittstellen mit Neuwerkschnittstellen der Ringsysteme 3 und 5 verbunden. Eine Station kann beispielsweise ein Bildfernsprecher, ein Personal-Computer oder eine Workstation bzw. ein Fernsprecher sein. Die Nachrichten bzw. Informationen, die von den Stationen bzw. den Netzwerkschnittstellen stammen, werden nach dem asynchronen Transfermodus mittels Zellen übertragen. Eine Zelle enthält ein Kopffeld mit beispielsweise 5 Byte und ein Informationsfeld mit beispielsweise 48 Byte. Die im Kopffeld der Zelle enthaltenen Informationen dienen insbesondere zur Adressierung und zur Durchführung von Vermittlungsfunktionen. Jeder Netzknoten ist noch mit einem nicht dargestellten Netzwerkmanagementsystem zur Steuerung des lokalen Netzwerkes gekoppelt.

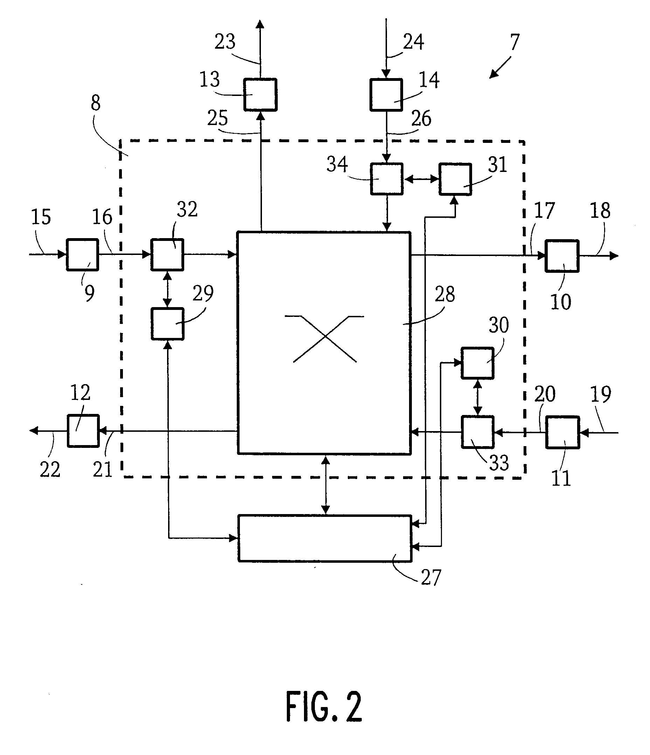

Eine Netzwerkschnittstelle 7 mit vier Ringanschlüssen ist in der Fig. 2 detaillierter dargestellt. Die Netzwerkschnittstelle 7 enthält eine Koppelvorrichtung 8, die über Pufferspeicher 9 bis 14 mit Ring- und Brückenanschlüssen gekoppelt ist und den Zellenstrom weitervermittelt.

Der Pufferspeicher 9 ist einerseits mit einem Empfangs-Ringanschluß 15 eines ersten Ringes und andererseits mit einem Anschluß 16, der zur Koppelvorrichtung 8 führt, gekoppelt. Der Pufferspeicher 9 erhält noch ein erstes Empfangstaktsignal, welches aus dem Zellenstrom des Empfangs-Ringanschlusses 15 abgeleitet ist, und ein internes Taktsignal von einem Taktgenerator der Netzwerkschnittstelle 7. Der Pufferspeicher 10 ist über einen Anschluß 17 mit der Koppelvorrichtung 8 gekoppelt und liefert einen Zellenstrom an einen Sende-Ringanschluß 18 des ersten Ringes. Dem Pufferspeicher 10 wird das interne Taktsignal und ein erstes Sende-Taktsignal geliefert, welches beispielsweise aus dem internen Taktsignal abgeleitet ist.

Die Pufferspeicher 11 erhält einen Zellenstrom von einem Empfangs-Ringanschluß 19 eines zweiten Ringes und liefert einen Zellenstrom über einen Anschluß 20 zur Koppelvorrichtung 8. Von einem Anschluß 21 der Koppelvorrichtung 8 empfängt der Pufferspeicher 12 Zellen, die an einen Sende-Ringanschluß 22 des zweiten Ringes weiterleitet werden. Der Pufferspeicher 11 erhält ein zweites Empfangstaktsignal, welches aus dem Zellenstrom des Empfangs-Ringanschlusses 19 abgeleitet ist, und das interne Taktsignal. Dem Pufferspeicher 12 wird das interne Taktsignal und ein zweites Sende-Taktsignal geliefert, welches beispielsweise aus dem internen Taktsignal abgeleitet ist.

Ein Brückenanschluß 23 ist über den Pufferspeicher 13 und ein Brückenanschluß 24 ist über den Pufferspeicher 14 mit der Netzwerkschnittstelle 7 gekoppelt. Der Pufferspeicher 13, der einen Zellenstrom von der Koppelvorrichtung 8 erhält, ist über einen Anschluß 25 mit der Koppelvorrichtung 8 gekoppelt. Dem Pufferspeicher 13 wird ebenfalls das interne Taktsignal und gegebenenfalls ein von einer an die Brückenanschlüsse 23 und 24 angeschlossenen Station ein erstes Stationssignal geliefert. Der Pufferspeicher 14, dem ein Zellenstrom von einer Netzwerkschnittstelle eines anderen Ringsystems oder einer Station geliefert wird, ist über den Brückenanschluß 24 mit einer Station oder einer Netzwerkschnittstelle eines anderen Ringsystems und über einen Anschluß 26 mit der Koppelvorrichtung 8 gekoppelt. Dieser Pufferspeicher 14 erhält gegebenenfalls ein zweites Stationssignal und das interne Taktsignal. In den Pufferspeichern 9 bis 14 findet jeweils eine Anpassung des Zellenstroms an ein Taktsignal statt. Die Ableitung der verschiedenen Taktsignale aus dem Zellenstrom und die Erzeugung des internen Taktsignals im Taktgenerator sind hier nicht näher dargestellt. Die Stationstaktsignale können beispielsweise gleich dem internen Taktsignal sein. In diesem Fall werden keine Pufferspeicher 13 und 14 benötigt.

In der Netzwerkschnittstelle 7 ist noch eine die Koppelvorrichtung 8 steuernde Steueranordnung 27 enthalten, die beispielsweise zum Verbindungssaufbau und - abbau dient. Die Steueranordnung 27, die als Mikroprozessor realisiert sein kann, kann auch Zellen erhalten und erzeugen.

In der Koppelvorrichtung 8 ist noch ein Koppelfeld 28, drei Wegespeicheranordnungen 29, 30 und 31 und drei Empfangsschaltungen 32, 33 und 34 enthalten. In den Empfangsschaltungen 32, 33 und 34 werden jeweils die Kopffelder von über Anschlüssen 16, 20 und 26 ankommenden Zellen ausgewertet.

Im Kopffeld enthaltene Adresseninformationen werden zur Ansteuerung verschiedener Tabellen für die mit den Empfangsschaltungen 32, 33 und 34 verbundenen Wegespeicheranordnungen 29, 30 und 31 verwendet. Die in den Tabellen abgelegten Daten werden jeweils von den Empfangsschaltungen 32, 33 und 34 verwendet, um die weitere Verarbeitung und Weiterleitung der Zelle zu organisieren. Beispielsweise kann die Empfangsschaltung 32 die Zelle kopieren und mit neuen Adresseninformationen versehen. Die Originalzelle wird z.B. über das Koppelfeld 28 an den Brückenanschluß 23 und die kopierte Zelle über das Koppelfeld 28 an den Pufferspeicher 10 gegeben. Es besteht noch die Möglichkeit, daß das Koppelfeld 28 diese Kopierfunktion durchführt.

Die Empfangsschaltung 32 ist über den Anschluß 16 mit dem Pufferspeicher 9 gekoppelt und leitet empfangene Zellen zum Koppelfeld 28 weiter. Die Wegespeicheranordnung 29 ist mit der Empfangschaltung 32 verbunden. Die Empfangsschaltung 33 ist mit der Wegespeicheranordnung 30 verbunden, erhält Zellen von dem Pufferspeicher 11 und gibt Zellen an das Koppelfeld 28 weiter. Zwischen dem Koppelfeld 28 und dem Anschluß 26 ist die Empfangsschaltung 34 angeordnet, die mit der Wegespeicheranordnung 31 verbunden ist.

Über die Ringanschlüsse 15 und 18 des ersten Ringes und über die Ringanschlüsse 19 und 22 werden zwei Arten von Nutzzellen übertragen. Einerseits Anwenderzellen, die in ihrem Informationsfeld z. B. Nachrichten oder Daten des Benutzers einer zuvor aufgebauten Verbindung enthalten und andererseits Kontrollzellen, die in ihrem Informationsfeld Steuerungsinformationen enthalten.

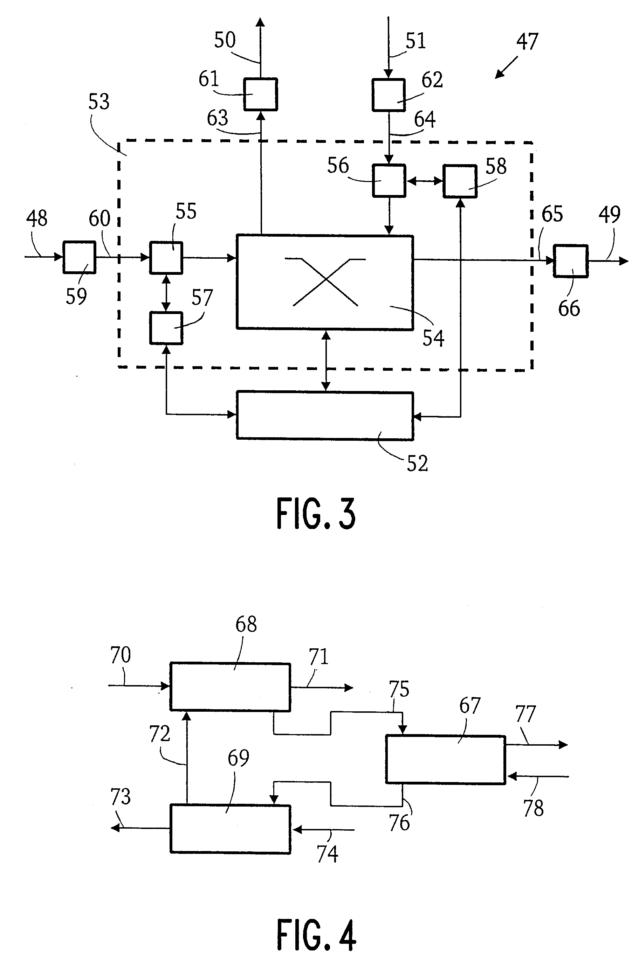

Fig. 3 zeigt eine Netzwerkschnittstelle 47 mit zwei Ringanschlüssen 48 und 49. Die Netzwerkschnittstelle 47 arbeitet auf ähnliche Weise wie die Netzwerkschnittstelle 7 der Fig. 2. Zellen werden bei dieser Netzwerkschnittstelle zwischen den Ringanschlüssen 48 und 49, Brückenanschlüssen 50 und 51 und einer Steueranordnung 52 von einer Koppelvorrichtung 53 übertragen. Die Koppelvorrichtung 53 enthält ein Koppelfeld 54, zwei Empfangsschaltungen 55 und 56 und zwei Wegespeicheranordnungen 57 und 58. Der Ringanschluß 48 ist über einen Pufferspeicher 59 einen Anschluß 60 mit der Empfangsschaltung 55 gekoppelt. Die Empfangsschaltung 55, die mit der Wegespeicheranordnung 57 gekoppelt ist, leitet empfangene Zellen an das Koppelfeld 54 weiter. Die Wegespeicheranordnung 57 liefert der Empfangsschaltung 55 gegebenenfalls neue Steuerungsinformationen für das Kopffeld der empfangenen Zelle. Das Koppelfeld 54 ist ferner über einen Anschluß 65 und einem Pufferspeicher 66 mit dem Ringanschluß 49 gekoppelt.

Die Brückenanschlüsse 50 und 51 sind ebenfalls jeweils mit Pufferspeichern 61 und 62 verbunden. Dem Pufferspeicher 61 werden über einen Anschluß 63 Zellen vom Koppelfeld 54 geliefert. Zwischen dem Pufferspeicher 62 und dem Koppelfeld 54 ist die Empfangsschaltung 56 angeordnet, die mit der Wegespeicheranordnung 58 gekoppelt ist. Die Empfangsschaltung 56 und der Pufferspeicher 62 sind über einen Anschluß 64 miteinander gekoppelt. Die Steueranordnung 52 dient zur Steuerung der Wegespeicheranordnungen 57 und 58 und erhält zumindestens Zellen von dem Koppelfeld 54.

Eine Netzwerkschnittstelle mit vier Ringanschlüssen, wie in Fig. 2 gezeigt, läßt sich auch aus drei Netzwerkanschlüssen mit jeweils zwei Ringanschlüssen, wie in Fig. 3 gezeigt, bilden. In Fig. 4 sind drei Netzwerkschnittstellen 67, 68 und 69 dargestellt. Die Ringanschlüsse 70 und 71 der Netzwerkschnittstelle 68 und die Ringanschlüsse 73 und 74 der Netzwerkschnittstelle 69 bilden auch bei dieser Zusammenschaltung Ringanschlüsse. Der Brückenanschluß 75 der Netzwerkschnittstelle 68 ist der Ringanschluß der Netzwerkschnittstelle 67, deren Brückenanschlüsse 77 und 78 auch die Brückenanschlüsse bei dieser Zusammenschaltung sind. Der weitere Ringanschluß der Netzwerkschnittstelle 67 ist mit dem Brückenanschluß 76 der Netzwerkschnittstelle 69 verbunden. Der Brückenanschluß 72 verbindet noch die beiden Netzwerkschnittstellen 68 und 69.

Eine Netzwerkschnittstelle leitet also Zellen von einem Ringanschluß zu dem anderen Ringanschluß des gleichen Rings, zu einem Brücken- oder Stationsanschluß oder auch bei vier Ringanschlüssen zu dem Ringanschluß des anderen Rings. Eine Zelle auf einem Brücken- oder Stationsanschluß wird zu einem Ringanschluß weitergegeben. Zellen können auch von der Steueranordnung der Netzwerkschnittstelle empfangen und gesendet werden.

Bestimmte Bits im Kopffeld einer Zelle sind für den VCI (virtual channel identifier) reserviert. Diese Angabe enthält nach Normungsvorschlägen den Bestimmungsort einer Zelle und gibt damit eine virtuelle Verbindung an. Des weiteren sind bestimmte Bits im Kopffeld der Zelle für den VPI (virtual path identifier) reserviert, der ein Bündel mehrerer virtueller Verbindungen angibt. Für den VPI sind im Kopffeld der Zelle nach derzeitigen Normungsbestimmungen 8 Bit und für den VCI 16 Bit vorgesehen.

Der VCI und der VPI werden bei diesem Ausführungsbeispiel für andere Informationen als bei den Normungsvorschlägen vorgesehen. Der VPI enthält Informationen über die Adresse (Adresseninformationen) bzw. den Bestimmungsort (Netzknoten) einer Zelle in einem Ringsystem. Der VCI wird für die Angabe über die anwenderbezogene Kennung für eine Verbindung, die Art der Verbindung und die Zellenart verwendet. Außerdem wird der VCI als Adresse für ein Ringsystem benutzt.

Eine Steueranordnung 27 der Netzwerkschnittstelle 7 oder eine Steueranordnung 52 der Netzwerkschnittstelle 47 steuert den Verbindungsaufbau einer zugeordneten Station mit anderen Stationen. Die entsprechenden Steuerungsvorgänge für den Aufbau und Abbau von Verbindungen kann beispielsweise der europäischen Patentanmeldung EP-0 641 105 A2 entnommen werden.

Die Wegespeicheranordnungen 29 bis 31 der Netzwerkschnittstelle 7 bzw. die Wegespeicheranordnungen 57 und 58 der Netzwerkschnittstelle 47 enthalten Informationen die von den zugeordneten Empfangsschaltungen 32 bis 34 bzw. 55 und 56 ausgewertet werden, um die weitere Verarbeitung und Weiterleitung der empfangenen Zelle zu organisieren. Beispielsweise kann eine Zelle mit einer anderen Adresse versehen werden, kopiert oder gelöscht werden. Die Wegespeicheranordnungen 29 bis 31 bzw. 57 und 58 können von der jeweiligen Steueranordnung 27 bzw. 52 beispielsweise im Fehlerfall oder aufgrund bestimmter Informationen des Netzwerkmanagementsystems verändert werden.

Bei einer Verbindung zwischen einem Netzknoten eines ersten Ringsystems und einem Netzknoten eines zweiten Ringsystems müssen bei einem Übertritt einer Zelle von einem Ringsystem in ein anderes Veränderungen des VPI und des VCI durchgeführt werden. Hierzu sind vor dem Verbindungsaufbau entsprechende Einträge in den Wegespeicheranordnungen vorgenommen worden. Es sei angenommen, daß Zellen von dem Ringsystem B des Netzknotens f (B,f) zu dem Ringsystem F des Netzknotens d (F,d) gesendet werden sollen (Fig. 1). Hierbei sei folgender Weg festgelegt: (B,f) - (B,c) - (C,f) - (C,d) - (D,a) - (D,d) - (E,a) - (E,d) - (F,a) - (F,d). Eine von dem Netzknoten f des Ringsystems B erzeugte Zelle erhält die Adresse (C,f) und wird über die Netzknoten e und d zu dem Netzknoten c des Ringsystems B und über die zugehörigen Brückenanschlüsse zum Netzknoten f des Ringsystems C übertragen. Im Netzknoten f des Ringsystems C wird die Adresse (C,f) durch eine neue Adresse (D,a) ersetzt. Anschließend gelangt die Zelle über die Netzknoten e und d des Ringsystems C zum Netzknoten a des Ringsystems D. Nach Einsetzen einer neuen Adresse (E,a) läuft die Zelle über den Netzknoten d des Ringsystems D zu dem Netzknoten a des Ringsystems E. Vor dem Eintritt in das letzte Ringsystem F wird eine neue Adresse (F,a) in das Kopffeld der Zelle eingesetzt und die Zelle über den Knoten d (Ringsystem E) zum Knoten a des Ringsystems F gegeben. Nach einer weiteren Übersetzung gelangt die Zelle über die Netzknoten b und c des Ringsystems F zum Netzknoten d.

Wenn ein Fehler im lokalen Netzwerk auftritt, werden von dem einen Fehler detektierenden Netzknoten und dem Netzwerkmanagmentsystem verschiedene Maßnahmen durchgeführt. Beispielsweise kann ein Ringanschluß oder ein Brücken- oder Stationsanschluß unterbrochen werden oder ein Netzknoten ausfallen. Eine Netzwerkschnittstelle, die einen solchen Fehler detektien, meldet diesen Fehler an das Netzwerkmanagementsystem. Von der Steueranordnung einer Netzwerkschnittstelle wird ein solcher Fehler z.B. nach Aussenden von Kontrollzellen, die nicht wieder empfangen werden oder durch einen Synchronisationsverlust detektiert. Nach Empfang einer Fehlermeldung stellt das Netzwerkmanagementsystem diese Fehlerinformation zur Verfügung, so daß Wegespeicheranordnungen in den Netzwerkschnittstellen von der zugehörigen Steueranordnung entsprechend geändert werden können.

Tritt ein Fehler auf einem Ringanschluß zwischen zwei Netzwerkschnittstellen auf, so informiert die aufgrund des Fehlers keine weiteren Zellen empfangende Netzwerkschnittstelle das Netzwerkmanagementsystem. Die die Zellen aussendende Netzwerkschnittstelle schaltet nach Empfang der Fehlerinformation von dem Netzwerkmanagementsystem eine Schleife. Das bedeutet, daß alle Zellen, die über den defekten Ringanschluß zu leiten sind, über eine Schleife auf den Ringanschluß des anderen Rings gegeben werden. Dies geht aber nur dann, wenn eine Netzwerkschnittstelle mit vier Ringanschlüssen vorliegt. Im anderen Fall, bei einer Netzwerkschnittstelle mit zwei Ringanschlüssen werden die Zellen gelöscht.

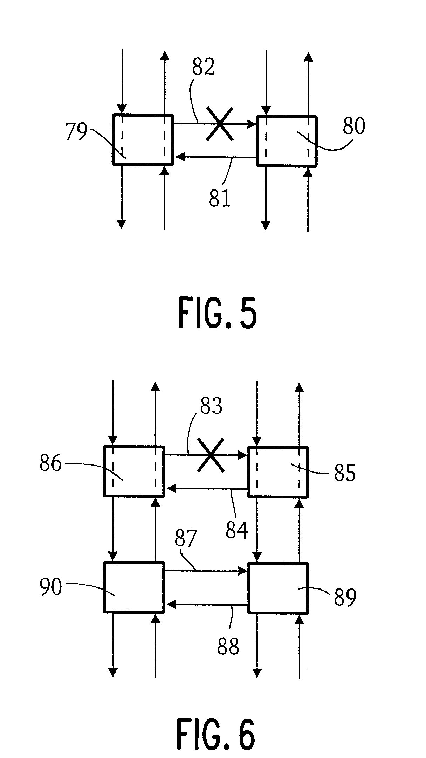

Liegt ein Fehler auf einem Brückenanschluß vor, d.h. eine oder mehrere Leitungen zwischen zwei Netzknoten zweier Ringsysteme sind defekt, informiert ein den Fehler detektierender Netzknoten das Netzwerkmanagementsystem. Weiter werden in den über den Brückenanschluß verbundenen Netzwerkschnittstellen die Einträge in den Wegespeicheranordnungen verändert. Eine Zelle, die über die Brückenanschlüsse gegeben werden soll, wird dann von den entsprechenden Koppelvorrichtungen nur noch über den Ring und nicht zu einem Brückenanschluß weitergeleitet. In Fig. 5 ist hierzu ein Beispiel mit zwei Netzwerkschnittstellen 79 und 80 dargestellt. Ein Brückenanschluß 81 liefert Zellen von der Netzwerkschnittstelle 80 einem ersten Ringsystem der Netzwerkschnittstelle 79 eines zweiten Ringsystems. Über den Brückenanschluß 82 werden normalerweise Zellen von der Netzwerkschnittstelle 79 zur Netzwerkschnittstelle 80 gegeben. Dieser Brückenanschluß 82 ist beispielsweise unterbrochen. Die Zellen werden dann nicht mehr über die Brückenanschlüsse 81 und 82 gegeben, sondern bleiben im jeweiligen Ringsystem, wo sie gegebenenfalls vernichtet werden, falls keine weitere Verbindung zwischen den beiden Ringsystemen besteht.

In Fig. 6 ist ein Beispiel dargestellt, bei dem eine weitere Brückenverbindung zwischen zwei Ringsystemen besteht. Es sei ein Brückenanschluß 83 oder 84 zwischen einer Netzwerkschnittstelle 85 eines ersten Ringsystems und einer Netzwerkschnittstelle 86 eines zweiten Ringsystems unterbrochen. Zellen, welche über die Brückenanschlüsse 83 und 84 von einem Ringsystems ins andere gelangen sollen, werden daher über weitere Brückenanschlüsse 87 oder 88 zwischen der Netzwerkschnittstelle 89 des ersten Ringsystems und der Netzwerkschnittstelle 90 des zweiten Ringsystems übertragen. Die Wegespeicheranordnungen in den Netzwerkschnittstellen 85, 86, 89 und 90 sind also so eingerichtet, daß beide Zellen von einem Ringsystem ins andere übertragen werden können. Die Wegespeicheranordnungen der Netzwerkschnittstellen 85 und 89 und der Netzwerkschnittstellen 86 und 90 weisen den gleichen Inhalt auf. Somit ist bei Ausfall eines Brückenanschlusses gewährleistet, daß Zellen über weitere Brückenanschlüsse zwischen Ringsystemen übertragen werden können. In Fig. 6 weisen die Netzwerkschnitt stellen 85, 86, 89 und 90 jeweils vier Ringanschlüsse auf. Es ist auch möglich, daß Netzwerkschnittstellen mit jeweils zwei Ringanschlüssen eingesetzt werden.

Bei einem Fehler in dem lokalen Netzwerk kann es aufgrund einer eingeschränkten Kapazität zu Zellverlusten aufgrund von Blockierungen in den jeweiligen Pufferspeichern an den Ring- oder Brücken- oder Stationsanschlüssen kommen. Daher wird jeder Verbindung und somit jeder zur Verbindung gehörigen Zelle eine hohe oder niedrige Priorität zugeordnet. Eine Station oder eine Steueranordnung weisen einer erzeugten Zelle eine hohe oder niedrige Priorität zu. Ein Bit im VCI des Kopffeldes kann zur Kennzeichnung der Priorität verwendet werden.

Beispielsweise melden die jeweiligen Pufferspeicher 9 bis 14 der Netzwerkschnittstelle 7 (Fig. 2) über nicht dargestellte Leitungen der Steueranordnung 27 ihren Pufferfüllstand. Falls in einem Pufferspeicher 9 bis 14 ein bestimmter Pufferfüllstand überschritten ist, werden die niedrig priorisierten Zellen beispielsweise in einer Empfangsschaltung 32 oder 33 vernichtet. Hierzu muß einer Empfangsschaltung 32 oder 33 eine entsprechende Anweisung von der Steueranordnung 27 vorliegen und die Zelle muß über den Pufferspeicher 9 bis 14 gegeben werden, dessen bestimmter Pufferfüllstand überschritten ist. Auf die gleiche Art werden anhand der Pufferfüllstände in den Pufferspeichern 59, 61, 62 und 66 der Netzwerkschnittstelle 47 Zellen von den Empfangsschaltungen 55 und 56 überprüft (Fig. 3).

## Patentansprüche

1. Lokales, nach dem asynchronen Transfermodus (ATM) arbeitendes Netzwerk zur Übertragung von Zellen mit mehreren über Ringanschlüsse (15, 18, 19, 22; 48, 49) gekoppelten Netzwerkschnittstellen, die über weitere Anschlüsse (23, 24; 50, 51) entweder mit jeweils einer Station oder mit jeweils einer Netzwerkschnittstelle eines anderen Ringsystems gekoppelt sind und die jeweils zur Vermittlung von von einer Station oder von einer Netzwerkschnittstelle erzeugten Zellen vorgesehen sind,
dadurch gekennzeichnet,
daß eine Station oder eine Netzwerkschnittstelle (7, 47) zur Kennzeichnung von erzeugten Zellen mit einer hohen oder niedrigen Priorität und
daß eine Station oder eine Netzwerkschnittstelle (7, 47) bei Überschreitung einer bestimmten Anzahl von empfangenen Zellen während eines vorgegebenen Zeitabschnittes zur Löschung der Zellen mit niedriger Priorität vorgesehen ist.

2. Lokales Netzwerk nach Anspruch 1,
dadurch gekennzeichnet,
daß eine Station oder eine Netzwerkschnittstelle (7, 47) zur Kennzeichnung eines Bits im Kopffeld einer erzeugten Zelle für eine hohe oder niedrige Priorität vorgesehen ist.

3. Lokales Netzwerk nach Anspruch 1 oder 2,
dadurch gekennzeichnet,
daß eine Netzwerkschnittstelle (7, 47) an Ring-, Stations- oder Brückenanschlüssen (15, 18, 19, 22, 23, 24; 48, 49, 50, 51) Pufferspeicher (9 bis 14; 59, 61, 62, 66) enthält und
daß bei Überschreiten eines bestimmten Pufferfüllstandes die Netzwerkschnittstelle (7, 47) zur Löschung von den Pufferspeicher (9 bis 14; 59, 61, 62, 66) durchlaufenden Zellen mit einer niedrigen Priorität vorgesehen ist.

4. Lokales Netzwerk nach Anspruch 3,
dadurch gekennzeichnet,
daß eine Netzwerkschnittstelle (7, 47) eine Steueranordnung (27, 52) und Empfangsschaltungen (32 bis 34; 55, 56) enthält, die jeweils Pufferspeichern (9, 11, 14; 59, 62) zugeordnet sind, die zum Empfang von Zellen von einer anderen Netzwerkschnittstelle oder einer zugeordneten Station vorgesehen sind,
daß die Steueranordnung (27, 52) zum Empfang von Informationen über den Pufferfüllstand der in der Netzwerkschnittstelle angeordneten Pufferspeicher (9 bis 14; 59, 61, 62, 66) und zur Ausgabe von Löschungsmeldungen an die jeweils einem Pufferspeicher (9, 11, 14; 59, 62) zugeordneten Empfangsschaltungen (32 bis 34; 55, 56) zur Löschung von Zellen mit einer niedrigen Priorität vorgesehen ist.

5. Netzwerkschnittstelle (7, 47) für ein lokales, nach dem asynchronen Transfermodus (ATM) arbeitendes Netzwerk, welche zur Lieferung von Zellen über Ringanschlüsse (15, 18, 19, 22; 48, 49) zu anderen Netzwerkschnittstellen und über weitere Anschlüsse (23, 24; 50, 51) entweder zu jeweils einer Station oder zu jeweils einer Netzwerkschnittstelle eines anderen Ringsystems vorgesehen ist,
dadurch gekennzeichnet,
daß die Netzwerkschnittstelle (7, 47) zur Kennzeichnung von erzeugten Zellen mit einer hohen oder niedrigen Priorität und
bei Überschreitung einer bestimmten Anzahl von empfangenen Zellen während eines vorgegebenen Zeitabschnittes zur Löschung der Zellen mit niedriger Priorität vorgesehen ist.

6. Verfahren zur Übertragung von Zellen in einem lokalen, nach dem asynchronen Transfermodus (ATM) arbeitenden Netzwerk mit mehreren über Ringanschlüsse (15, 18, 19, 22; 48, 49) gekoppelten Netzwerkschnittstellen, die über weitere Anschlüsse (23, 24; 50, 51) entweder mit jeweils einer Station oder mit jeweils einer Netzwerkschnittstelle eines anderen Ringsystems gekoppelt sind und die jeweils von einer Station oder von einer Netzwerkschnittstelle erzeugte Zellen vermitteln,
dadurch gekennzeichnet,
daß in einer Station oder einer Netzwerkschnittstelle (7, 47) erzeugte Zellen mit einer hohen oder niedrigen Priorität gekennzeichnet werden und
daß eine Station oder eine Netzwerkschnittstelle (7, 47) bei Überschreitung einer bestimmten Anzahl von empfangenen Zellen während eines vorgegebenen Zeitabschnittes Zellen mit niedriger Priorität löschen.
